# EUROPÄISCHE PATENTSCHRIFT

(11) **EP 4 621 414 B1**
(45) Veröffentlichungstag und Bekanntmachung des Hinweises auf die Patenterteilung: **30.09.2026**
(21) Anmeldenummer: 25164509.9
(22) Anmeldetag: 18.03.2025
(51) Int. Cl.: G01N 35/10

(54) **PIPETTIERGERÄT ZUR AUFNAHME UND/ODER ABGABE EINES PIPETTIERKOPFES**
PIPETTING DEVICE FOR RECEIVING AND/OR DISPENSING A PIPETTING HEAD
APPAREIL DE PIPETAGE DESTINÉ À RECEVOIR ET/OU À DISTRIBUER UNE TÊTE DE PIPETAGE

(30) Priorität: 20.03.2024 CH 2952024
(43) Veröffentlichungstag der Anmeldung: 24.09.2025
(73) Patentinhaber: INTEGRA Biosciences AG, 7205 Zizers (CH)
(72) Erfinder: Halter, Erwin, 7000 Chur (CH); Lareida, Mirco, 7017 Flims (CH); Boner, Nicolas, 7000 Chur (CH); Städler, Rafael, 7212 Seewis-Schmitten (CH)
(74) Vertreter: Swisspat Riederer Hasler Patentanwälte AG

(56) Entgegenhaltungen:
- EP-A1- 2 508 259
- WO-A1-2011/140063
- CN-A- 112 808 340
- INTEGRA BIOSCIENCES: "VIAFLO 96 / VIAFLO 384 - Electronic 24, 96 and 384 channel pipettes", 10 January 2019 (2019-01-10), XP093170915, Retrieved from the Internet <URL:https://www.youtube.com/watch?v=hcVBsQgU34c> [retrieved on 20240606]
- INTEGRA: "VIAFLO96/384 Operating instructions V19", 26 September 2022 (2022-09-26), XP093171417, Retrieved from the Internet <URL:https://www.integra-biosciences.com/sites/default/files/documents/125950_OI_VIAFLO_96_384_EN.pdf> [retrieved on 20240606]

## Beschreibung

### TECHNISCHES GEBIET DER ERFINDUNG

Die Erfindung betrifft ein Pipettiergerät zur automatischen Aufnahme und/oder Abgabe eines Pipettierkopfes, einen für ein solches Pipettiergerät konfigurierten Pipettierkopf, ein Set aus einem erfindungsmässigen Pipettiergerät und einem erfindungsgemässen Pipettierkopf, und ein Verfahren zur Aufnahme eines Pipettierkopfes durch ein erfindungsmässes Pipettiergerät.

### HINTERGRUND DER ERFINDUNG

Pipettiergeräte sind vorgesehen, einen Pipettierkopf aufzunehmen, um mit dem Pipettierkopf die Pipettierung von am Pipettiergerät angeordneten Mikrotiterplatten durchzuführen. Für die Aufnahme einer Flüssigkeit aus einem Reservoir und befüllen der Behälter einer Mikrotiterplatte mit dieser Flüssigkeit muss sich der Pipettierkopf in zwei Richtungen, nämlich in Richtung der Höhe und der Breite (Z- und X-Achsenrichtung), bewegen. Falls der Laborant die Behälter der Mikrotiterplatte füllen möchte, welche in Y-Richtung versetzt sind, muss die Mikrotiterplatte in Y-Richtung bewegt werden.

Bei den bis heute verwendeten Pipettiergeräten muss der Laborant den zu verwendenden Pipettierkopf von Hand selber einsetzen. Hierfür ist eine Türe seitlich am Pipettiergerät angeordnet, durch welche nach deren Öffnung der Pipettierkopf eingeschoben werden kann. Zugleich sorgt die Türe nach dem Schliessen für die Sicherung des Pipettierkopfs im Pipettiergerät. Diese Vorgehensweise weist negative Folgen für die Arbeit im Labor auf. Die Türe ist in der Regel abnehmbar, um mit möglichst kleinem Platzbedarf das Einführen des Pipettierkopfes möglichst einfach zu gestalten. Bei diesem Vorgang wird die Türe auf der Arbeitsfläche deponiert, wobei wiederum sichergestellt werden muss, dass die Türe nicht kontaminiert ist. Das manuelle Einführen des Pipettierkopfes birgt auch die Gefahr, dass der Pipettierkopf falsch in das Pipettiergerät eingeführt oder beim Vorgang dabei vom Laboranten beschädigt werden kann.

### AUFGABE

Es ist deshalb eine Aufgabe der vorliegenden Erfindung, ein Pipettiergerät vorzuschlagen, welches einen Pipettierkopf automatisch aufnehmen und abgeben kann und zugleich die vollständige Pipettierung einer Mikrotiterplatte erleichtert.

### BESCHREIBUNG

Die Aufgabe wird gelöst mit einem Pipettiergerät zur automatischen Aufnahme und/oder Abgabe eines Pipettierkopfes mit den Merkmalen des Patentanspruchs 1.

Das Pipettiergerät weist eine Plattform mit einer Ablagefläche, eine Stützvorrichtung und eine an der Stützvorrichtung angeordnete Haupteinheit auf. Die Ablagefläche ist zur Aufnahme von Laborbehältern vorgesehen. Die Haupteinheit ist oberhalb der Ablagefläche angeordnet und weist eine Öffnung an der unteren Seite mit einer Aufnahmevorrichtung zur Aufnahme eines Pipettierkopfes auf. Das Pipettiergerät ist konfiguriert, dass der Pipettierkopf durch Einführen durch die Öffnung in der Haupteinheit aufgenommen wird, wozu die Aufnahmevorrichtung relativ zur Ablagefläche in die drei Koordinaten-Achsen-Richtungen (X, Y und Z) bewegbar ist.

Durch die Möglichkeit der Aufnahmevorrichtung sich in alle drei Achsen-Richtungen relativ zu bewegen, kann sie von der Ablagefläche die Pipettierköpfe selbstständig aufnehmen. Die Pipettierköpfe brauchen nicht durch einen Benutzer in die Aufnahmevorrichtung eingeführt zu werden. Dadurch wird eine automatische Aufnahme von Pipettierköpfen durch die Aufnahmevorrichtung ermöglicht. Die Öffnung an der unteren Seite der Aufnahmevorrichtung führt zu einem möglichst einfachen Aufbau der Aufnahmevorrichtung, um Pipettierköpfe automatisch aufzunehmen.

In einer bevorzugten Ausführungsform steht die Haupteinheit von der Stützvorrichtung in Y-Richtung ab und die Haupteinheit ist zur Aufnahme und/oder Abgabe des Pipettierkopfes in Z- und Y-Richtung bewegbar. Die Y-Richtung bildet die Tiefe des Pipettiergeräts. Die Stützvorrichtung und die Haupteinheit sind bevorzugt in Y-Richtung nebeneinander angeordnet. Da die Haupteinheit oberhalb der Ablagefläche angeordnet ist, kann die Stützvorrichtung neben der Ablagefläche angeordnet sein. Die Haupteinheit ist vorgesehen, in Z- und Y-Richtung bewegt zu werden, um einen Pipettierkopf aufzunehmen und/ oder abzugeben. Durch die Bewegung der Haupteinheit in mindestens zwei Richtungen wird eine zuverlässigere und reproduzierbare Aufnahme oder Abgabe eines Pipettierkopfes gewährleistet.

Vorzugweise bildet die Aufnahmevorrichtung mit dem Pipettierkopf einen Formschluss. Durch die Bewegungsmöglichkeit der Aufnahmevorrichtung kann diese eine formschlüssige Verbindung mit dem Pipettierkopf eingehen und den Transport des Pipettierkopfs an eine beliebige Stellung ermöglichen. Der Vorteil der formschlüssigen Verbindung ist unter anderem, dass diese keine weiteren Hilfsmittel benötigt und deshalb schnell erzeugt und anschliessend auch wieder schnell aufgelöst werden kann.

Die Aufnahmevorrichtung weist vorzugsweise Hakenelemente zur Bildung der Formschluss-Verbindung auf. Die Hakenelemente bilden eine konstruktiv einfache Struktur, welche die Bildung einer Formschluss-Verbindung ermöglicht. Hierfür ist eine Bewegung der Hakenelemente in lediglich zwei der drei Raumachsen ausreichend.

In einer Ausführungsform weist die Aufnahmerichtung sich horizontal erstreckende Koppel-Elemente auf, die konfiguriert sind, dass sie in einer horizontalen Eingriff-Richtung mit sich ebenfalls horizontal erstreckenden Koppel-Element-Gegenstücken des Pipettierkopfes in Eingriff treten (so dass durch den Eingriff ein vertikales Anheben des Pipettierkopfes durch die Aufnahmevorrichtung bereitgestellt wird) bzw. sich in entgegengesetzter Richtung von diesen Koppel-Element-Gegenstücken lösen können. Dabei ist die Aufnahmevorrichtung konfiguriert, um zur Aufnahme bzw. Abgabe des Pipettierkopfes relativ zur Ablagefläche eine Bewegung in bzw. entgegen der horizontalen Eingriff-Richtung durchzuführen, wobei sich die Koppel-Elemente mit der Aufnahmevorrichtung mitbewegen. Die Bewegung der Aufnahmevorrichtung erfolgt dabei beispielsweise dadurch, dass sich die Aufnahmevorrichtung mit einer Bewegung der Haupteinheit mitbewegt. Alternativ oder in Kombination zu einer solchen gemeinsamen Bewegung der Aufnahmevorrichtung und der Haupteinheit ist auch denkbar, dass sich die Aufnahmevorrichtung relativ zur Haupteinheit bewegen kann.

Beispielsweise ist jedes der Koppel-Elemente jeweils Teil eines Hakenelements der Aufnahmevorrichtung, wobei jedes der Hakenelemente einen sich in vertikaler Richtung zur Ablagefläche hin erstreckenden Schenkel aufweist und die Koppel-Elemente sich in der horizontalen Eingriff-Richtung vom Schenkel weg erstrecken.

In einer weiteren Ausführungsform weist die Haupteinheit ein Verriegelungselement auf, welches konfiguriert ist, eine Verriegelungsstellung und eine Offenstellung einzunehmen. Dabei liegt ein Teil des Verriegelungselements in der Fixierstellung gegenüber der Offenstellung näher an oder weiter in einem räumlichen Pipettierkopfbereich, der bei aufgenommenem Pipettierkopf von diesem eingenommen wird. Beispielsweise ist dieses Teil des Verriegelungselements dafür vorgesehen, mit dem Pipettierkopf in Kontakt zu treten bzw. den Bewegungsspielraum des Pipettierkopfs in Richtung des Verriegelungselements zu blockieren. Allgemeiner ausgedrückt ist das Verriegelungselement dafür vorgesehen, den Bewegungsspielraum des Pipettierkopfes in zumindest eine horizontale Raumrichtung zu blockieren, so dass beispielsweise eine Bewegung des Pipettierkopfes in Eingriff-Richtung nach dem Eingreifen der Koppel-Elemente in die Koppel-Element-Gegenstücke verhindert oder zunächst rückgängig gemacht und dann blockiert wird (so dass mittels des Zusammenspiels der Koppel-Elemente, Koppel-Element-Gegenstücke und des Verriegelungselements beispielsweise eine formschlüssige Aufnahme des Pipettierkopfes in der Aufnahmevorrichtung bereitgestellt wird).

Beispielsweise liegt das Teil des Verriegelungselements (welches in der Fixierstellung gegenüber der Offenstellung näher am oder weiter im räumlichen Pipettierkopfbereich liegt) in der Fixierstellung weiter von der Stützvorrichtung weg als in der Offenstellung und die horizontale Eingriff-Richtung zeigt zur Stützvorrichtung. Somit bewegen sich die Koppel-Elemente zur Aufnahme des Pipettierkopfs in Richtung Stützvorrichtung, wobei die Bewegung des Pipettierkopfs in Richtung Stützvorrichtung durch das Verriegelungselement blockiert wird.

Alternativ liegt das Teil des Verriegelungselements in der Fixierstellung in einer horizontalen Richtung quer zur Stützvorrichtung näher am oder weiter im Pipettierkopfbereich und die horizontale Eingriff-Richtung zeigt zu oder weg von der Stützvorrichtung. Bei in der Haupteinheit aufgenommenem Pipettierkopf greift das Verriegelungselement somit krallenartig von der linken bzw. rechten Seite in den Pipettierkopf ein, um eine Bewegung des Pipettierkopfs hin oder weg von der Stützvorrichtung zu blockieren, wobei sich die Koppel-Elemente zur Aufnahme des Pipettierkopfs in Richtung Stützvorrichtung bewegt haben.

In einer weiteren Ausführungsform ist das Verriegelungselement in die Fixierstellung vorgespannt und die Haupteinheit weist eine relativ zur Aufnahmevorrichtung in vertikaler Richtung verstellbare Entriegelungskomponente auf. Die Haupteinheit ist ferner konfiguriert, dass eine vertikal nach oben erfolgte Verstellung der Entriegelungskomponente relativ zur Aufnahmevorrichtung das Verriegelungselement von der Fixierstellung in die Offenstellung überführt. Die Entriegelungskomponente ist derart angeordnet, dass sie während einer vertikalen Bewegung der Haupteinheit zur Ablagefläche hin von einem relativ zur Ablagefläche fix angeordneten Blockier-Gegenstück blockierbar ist.

Folglich kann das Pipettiergerät konfiguriert sein, um zur Aufnahme des Pipettierkopfes:
die Haupteinheit zunächst in Richtung der Ablagefläche zu bewegen bis das Verriegelungselement durch eine vertikal nach oben erfolgte Verstellung der Entriegelungskomponente relativ zur Aufnahmevorrichtung von der Fixierstellung in die Offenstellung überführt ist,
anschliessend die Aufnahmevorrichtung in der horizontalen Eingriff-Richtung zu verschieben, und
anschliessend eine Anhebe-Bewegung der Haupteinheit durchzuführen, bei der die Haupteinheit in Richtung von der Ablagefläche weg nach oben bewegt wird, bis sich das in die Fixierstellung vorgespannte Verriegelungselement zurück in die Fixierstellung bewegt hat.

In einer weiteren Ausführungsform weist die Aufnahmevorrichtung oberhalb der Koppel-Elemente weitere sich horizontal erstreckende Koppel-Elemente auf, die konfiguriert sind, dass sie in der horizontalen Eingriff-Richtung mit sich ebenfalls horizontal erstreckenden weiteren Koppel-Element-Gegenstücken des Pipettierkopfes in Eingriff treten bzw. sich in entgegengesetzter Richtung von diesen weiteren Koppel-Element-Gegenstücken lösen können. Die weiteren Koppel-Elemente sind in vertikaler Richtung relativ zu den unter ihnen angeordneten Koppel-Elementen bewegbar. Beispielsweise erfolgt diese Bewegung mittels desselben Antriebs, der im Pipettiergerät für das Bereitstellen der Pipettierbewegung vorgesehen ist. Oberhalb des Verriegelungselements weist die Haupteinheit zudem ein weiteres Verriegelungselement auf, welches konfiguriert ist, eine Verriegelungsstellung und eine Offenstellung einzunehmen, wobei ein Teil des weiteren Verriegelungselements in der Fixierstellung gegenüber der Offenstellung näher am oder weiter im Pipettierkopfbereich liegt. Das weitere Verriegelungselement ist in die Fixierstellung vorgespannt und wird durch eine Bewegung der weiteren Koppel-Elemente hin zu den unter ihnen angeordneten Koppel-Elementen von der Fixierstellung in die Offenstellung überführt. Die weiteren Koppel-Elemente können somit unabhängig von (z.B. vor) der Anhebe-Bewegung der Haupteinheit in vertikaler Richtung von den unter ihnen angeordneten Koppel-Elementen weg bewegt werden, bis sich das in seine Fixierstellung vorgespannte weitere Verriegelungselement zurück in die Fixierstellung bewegt hat.

Beispielsweise ist dieses separate Anheben eines oberen Teils des Pipettierkopfes für die Pipettierbewegung vorgesehen, um Pipetten-Spitzen des Pipettierkopfs mit einer Flüssigkeit zu füllen, indem die Pipetten-Spitzen zum Pipettieren in eine Flüssigkeiten abgesenkt werden, wobei ein hochziehen des oberen Teils in den Pipetten-Spitzen einen Unterdruck erzeugt und so die Flüssigkeit in die Pipetten-Spitzen gesogen wird.

In einer weiteren bevorzugten Ausführungsform ragt die Stützvorrichtung senkrecht zur Ablagefläche nach oben. Die senkrechte Ausrichtung der Stützvorrichtung gegenüber der Ablagefläche hilft die Stützvorrichtung stabil und mit minimalem Materialaufwand herzustellen.

Vorzugsweise ist die Stützvorrichtung seitlich an der Ablagefläche angeordnet. Die Anordnung der Stützvorrichtung nahe an der Ablagefläche führt zu einem einfacheren Aufbau der Stützvorrichtung und der Haupteinheit, da die Haupteinheit oberhalb der Ablagefläche angeordnet ist.

Vorteilhafterweise ist das Pipettiergerät als ein Benchtop-Gerät ausgeführt. Das Benchtop-Gerät ist ein Gerät, welches in einem Labor zum Einsatz kommt und auf einem Arbeitstisch platziert und betrieben werden kann. Ein Benchtop-Gerät kann durch eine einzelne Person von einem Platz zu einem anderen transportiert werden und führt zu einer hohen Flexibilität bei der Arbeit im Labor.

Beispielsweise weist das Pipettiergerät eine Masse von maximal 30 kg auf. Die Begrenzung der Masse auf 30 kg bildet die Grenze, unterhalb welcher das Pipettiergerät noch von einer einzelnen Person transportiert werden kann.

Beispielsweise weist das Pipettiergerät eine Breite von maximal 1000 mm auf. Die obere Grenze der Breite des Pipettiergeräts ermöglicht den Betrieb des Pipettiergeräts auf einer begrenzten Arbeitsfläche.

Das Pipettiergerät weist beispielsweise eine Tiefe von maximal 400 mm auf. Die Tiefe des Pipettiergeräts ist durch die Dimesion senkrecht zur Breite und Höhe definiert. Deshalb kann die Tiefe des Pipettiergeräts bestimmen, wie sehr das Pipettiergerät von einer Wand abstehen wird.

Das Pipettiergerät weist beispielsweise eine Höhe von maximal 600 mm auf. Die Höhe des Pipettiergeräts wird hauptsächlich durch die Stützvorrichtung bestimmt. Die Höhe ist beispielsweise auf maximal 600 mm begrenzt, da damit ein kompakter Aufbau des Pipettiergeräts erzielt wird und zugleich auch ausreichend Platz für den Pipettierkopf bleibt.

Beispielsweise weist die Aufnahmevorrichtung eine Auslenkung in Y-Richtung von maximal 30 mm auf. Die Auslenkung in Y-Richtung dient zum Bedienen der ganzen Breite der am Pipettiergerät angeordneten Mikrotiterplatte. Für die Bedienung der ganzen Mikrotiterplatte reicht die Bewegung der Aufnahmevorrichtung um 30 mm in Y-Richtung aus.

Vorteilhafterweise weist die Haupteinheit ein Bedienelement zur Steuerung der Bewegung der Haupteinheit auf. Das Bedienelement kann durch den Benutzer aktiv bedient werden. Die Bewegung des Benutzers am Bedienelement werden auf die Haupteinheit übertragen, welche daraufhin entsprechende Bewegungen durchführt. Der Benutzer kann auch eine Eingabe beim Bedienelement vornehmen, um die Bewegung der Haupteinheit zu bestimmen.

In einer weiteren bevorzugten Ausführungsform ist ein Adapter auf der Ablagefläche zur Aufnahme von Laborbehältern angeordnet. Der Adapter kann auf der Ablagefläche eingespannt sein. Der Adapter bietet die Möglichkeit, durch Auswechseln des Adapters jegliche Behältertypen mit dem gleichen Pipettiergerät aufnehmen zu können. Somit muss zur Aufnahme von unterschiedlichen Behältern nicht die ganze Ablagefläche ausgewechselt werden, sondern der Austausch des Adapters reicht hierfür bereits aus.

Beispielsweise ist die Ablagefläche und der Adapter konfiguriert, dass der Adapter in X- und Y-Richtung fix auf der Ablagefläche angeordnet und dazu konfiguriert ist, den Pipettierkopf aufzunehmen und in X- und Y-Richtung zu fixieren. Insbesondere weist der Adapter das Blockier-Gegenstück zum Blockieren der Entriegelungskomponente auf, wenn die Haupteinheit zur Ablagefläche hin bewegt wird.

Ein weiterer Aspekt der Erfindung betrifft einen Pipettierkopf der konfiguriert ist, um in ein wie vorhergehend beschriebenes Pipettiergerät aufgenommen zu werden. Der Pipettierkopf weist eine Ober- und eine Unterseite, eine Vorder- und eine Rückseite, und eine rechte und eine linke Seite auf. Für eine Aufnahme in das Pipettiergerät sind die Vorderseite zum Pipettiergerät hin und die Rückseite vom Pipettiergerät weg, die Oberseite nach oben und die Unterseite nach unten, und die linke und die rechte Seite jeweils in Richtungen quer zum Pipettiergerät gerichtet.

Gemäss diesem Aspekt weist der Pipettierkopf auf seiner linken und auf seiner rechten Seite, oder auf seiner Vorder- und auf seiner Rückseite, jeweils sich horizontal erstreckende Koppel-Element-Gegenstücke auf, die konfiguriert sind, um mit darauf abgestimmten und sich in eine horizontale Eingriff-Richtung bewegenden horizontal erstreckenden Koppel-Elementen des Pipettiergeräts in Eingriff zu treten bzw. sich wieder von den Koppel-Elementen des Pipettiergeräts zu lösen, wenn die Koppel-Elemente sich entgegen der horizontalen Eingriff-Richtung bewegen.

Beispielsweise werden die Koppel-Element-Gegenstücke jeweils durch auf der linken und auf der rechten Seite, oder auf der Vorder- und auf der Rückseite, angeordnete hakenförmige Aufnahmen bereitgestellt, wobei jede der hakenförmigen Aufnahmen durch eine nach oben offene und sich in vertikaler Richtung zur Unterseite hin erstreckende Schenkel-Öffnung und eine sich von dieser Schenkel-Öffnung in horizontaler Richtung weg erstreckenden und nach oben geschlossenen Einführ-Öffnung gebildet ist. Für die Aufnahme des Pipettierkopfes in das Pipettiergerät können die Koppel-Elemente somit mittels einer zunächst erfolgenden Abwärtsbewegung und einer anschliessenden in Eingriffs-Richtung erfolgenden Horizontalbewegung in die Einführ-Öffnungen einfahren, um so den Pipettierkopf anzuheben.

In einer weiteren Ausführungsform weist der Pipettierkopf ein Ober- und ein Unterteil auf und ist konfiguriert, dass das Oberteil relativ zum Unterteil vertikal nach oben weg bewegbar ist. Die Koppel-Element-Gegenstücke sind am Unterteil angeordnet und das Oberteil weist auf seiner linken und auf seiner rechten Seite, oder auf seiner Vorder- und auf seiner Rückseite, jeweils weitere Koppel-Element-Gegenstücke auf. Ähnlich zu den am Unterteil angeordneten Koppel-Element-Gegenstücken sind die am Oberteil angeordneten weiteren Koppel-Element-Gegenstücke konfiguriert, um mit darauf abgestimmten und sich in die horizontale Eingriff-Richtung bewegenden horizontal erstreckenden weiteren Koppel-Elementen des Pipettiergeräts in Eingriff zu treten bzw. sich wieder von den weiteren Koppel-Elementen des Pipettiergeräts zu lösen, wenn die weiteren Koppel-Elemente sich entgegen der horizontalen Eingriff-Richtung bewegen.

Beispielsweise werden auch die weiteren Koppel-Element-Gegenstücke jeweils durch eine nach oben offene und sich in vertikaler Richtung zur Unterseite hin erstreckende Schenkel-Öffnung und eine sich von dieser Schenkel-Öffnung in horizontaler Richtung weg erstreckende und nach oben geschlossene Einführ-Öffnung bereitgestellt.

In einem weiteren Aspekt betrifft die Erfindung ein Set aus einem erfindungsmässigen Pipettiergerät und einem Pipettierkopf wie vorhergehend beschrieben.

Insbesondere sind das Pipettiergerät und der Pipettierkopf derart aufeinander abgestimmt, dass das Pipettiergerät und der Pipettierkopf bei Eingriff der Koppel-Elemente in die Koppel-Element-Gegenstücke und gleichzeitig in der Fixierstellung angeordnetem Verriegelungselement eine formschlüssige Verbindung eingehen, die somit die Aufnahme des Pipettierkopfes in das Pipettiergerät (und damit das Anheben und Bewegen des Pipettierkopfes durch das Pipettiergerät) bereitstellt.

Vorzugsweise weist die Aufnahmevorrichtung des Pipettiergeräts Hakenelemente und der Pipettierkopf Halteelemente auf, welche zusammen eine formschlüssige Verbindung eingehen können. Die Verbindung zwischen Halte- und Hakenelementen ist rasch erzeugt und erhöht dadurch die Effizienz bei der Arbeit mit einem erfindungsmässigen Pipettiergerät.

Die Halteelemente sind bevorzugt seitlich am Pipettierkopf angebracht. Bei einer seitlichen Anordnung der Halteelemente am Pipettierkopf ist der Zugang von oben und unten an den Pipettierkopf weiterhin hindernisfrei gewährleistet. Zugleich sind die Halteelemente damit maximal voneinander entfernt, was wiederum die Stabilität beim Tragen eines Pipettierkopfes erhöht.

Die Aufnahme und Abgabe des Pipettierkopfes erfolgt vorteilhafterweise über die Bewegung in Z-Richtung und eine der beiden anderen zwei Achsen-Richtungen. Um eine Bewegung zum Einhaken der Hakenelemente in die Halteelemente vorzunehmen, muss die Haupteinheit eine Bewegung in Z-Richtung vornehmen. Zusätzlich reicht die Bewegung in eine weitere dazu senkrechte Richtung aus.

In einem weiteren Aspekt betrifft die Erfindung auch ein Verfahren zur Aufnahme eines Pipettierkopfes durch ein erfindungsgemässes Pipettiergerät, wobei die Aufnahmevorrichtung den Pipettierkopf durch eine Bewegung in zwei zueinander senkrechten Richtungen aufnimmt.

Vorzugsweise ist eine dieser beiden Richtungen die Z-Richtung, welche senkrecht zur Ablagefläche des Pipettiergeräts gerichtet ist.

### KURZBESCHREIBUNG DER FIGUREN

Nachfolgend wird die Erfindung unter Bezugnahme auf die Figuren in schematischer Darstellung näher beschrieben. Genannte bevorzugte Merkmale können in beliebiger Kombination verwirklicht werden - soweit sie sich nicht gegenseitig ausschliessen. Es zeigen in nicht massstabsgetreuer, schematischer Darstellung:
- Figur 1:: eine dreidimensionale Ansicht eines Pipettiergeräts;
- Figuren 2a,2b:: eine Seitenansicht eines Pipettiergeräts mit einer Teiltransparenz im Bereich der Aufnahme-Vorrichtung des Pipettierkopfes, einmal mit und einmal ohne in der Haupteinheit aufgenommenem Pipettierkopf;
- Figuren 3a-3d:: Seitenansichten des Pipettiergeräts wie in Figur 2a, wobei unterschiedliche zeitliche Zustände während dem Vorgang zur Aufnahme eines Pipettierkopfes in die Haupteinheit gezeigt sind;
- Figuren 4a-4h:: weitere Seitenansichten des Pipettiergeräts wie in Figur 2a zur Darstellung von weiteren Details des Aufnahmevorgangs zum Aufnehmen des Pipettierkopfes, wobei unterschiedliche zeitliche Zustände während dem Vorgang zur Aufnahme des Pipettierkopfes in die Haupteinheit gezeigt sind.

### DETAILIERTE BESCHREIBUNG DER FIGUREN

Im Folgenden stehen gleiche Bezugsziffern für gleiche oder funktionsgleiche Elemente (in unterschiedlichen Figuren). Ein zusätzlicher Apostroph kann zur Unterscheidung gleichartiger bzw. funktionsgleicher oder funktionsähnlicher Elemente in einer weiteren Ausführung dienen.

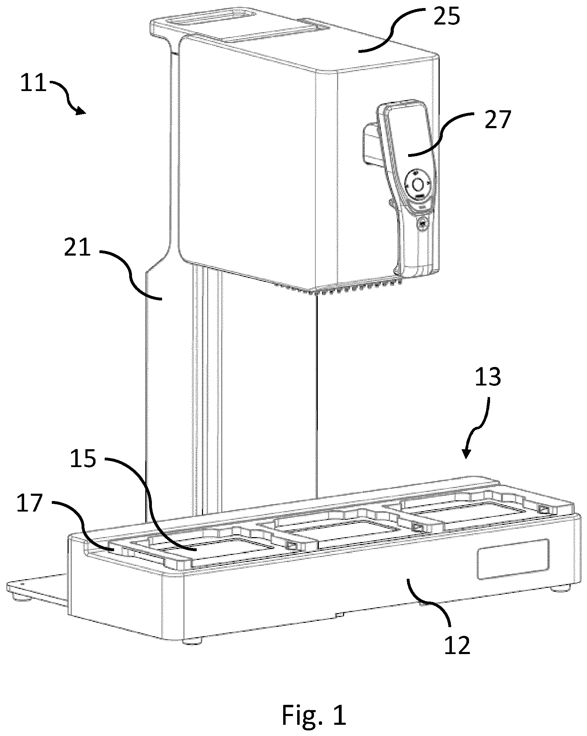

In Figur 1 ist ein Pipettiergerät 11 gezeigt, welches eine Ablagevorrichtung 12 mit einer Ablagefläche 13 aufweist. Die Ablagevorrichtung 12 weist einen quaderförmigen Aufbau auf mit einer dem Boden parallelen Längsseite. Die grösste Fläche der Ablagevorrichtung 12 wird durch die Ablagefläche 13 und der dieser gegenüberliegenden Fläche gebildet. Die Ablagefläche 13 weist in der in Figur 1 gezeigten Ausführung drei Einspannvorrichtungen 15 auf, welche entlang der Längsrichtung nebeneinander angeordnet sind. Die Einspannvorrichtungen 15 haben eine reckteckförmige Grundfläche, welche auf drei von vier Seiten von einem Rand 17 umgeben ist. Der Rand 17 trennt die Einspannvorrichtungen 15 voneinander ab und bietet den darauf platzierten Behältern oder Mikrotiterplatten Stabilität.

Seitlich an der Ablagevorrichtung 12 ist eine Stützvorrichtung 21 angeordnet, welche senkrecht wie ein Turm nach oben ragt. An der Stützvorrichtung 21 ist wiederum eine Haupteinheit 25 angeordnet. Die Haupteinheit 25 ist vorgesehen, einen Pipettierkopf aufzunehmen. Der Pipettierkopf kann Pipetten-Spitzen aufnehmen, welche zum Pipettieren einer Flüssigkeit abwechslungsweise in ein Behälter und eine Mikrotierplatte eingeführt werden können. Hierfür kann die Haupteinheit 25 entlang der Stützvorrichtung 21 nach oben und nach unten bewegt werden. Die Bewegung der Haupteinheit 25 wird mittels eines Bedienelements 27 durch den Laboranten ausgelöst. Das Bedienelement 27 ist an der Vorderseite der Haupteinheit 25 in Form einer länglichen und senkrecht nach unten gerichteten Bedieneinheit 27 gebildet. Die Bedienung der Haupteinheit 25 kann manuell über das Bedienelement 27 vorgenommen werden oder auch automatisch durch eine in der Haupteinheit 25 hinterlegte Software bzw. Code durchgeführt werden. Die Haupteinheit 25 ist ebenfalls in der Lage, in Längsrichtung der Ablagefläche 13 bewegt zu werden. Hierfür ist vorgesehen, dass die Stützvorrichtung 21 sich zusammen mit der Haupteinheit 25 entlang der Längsrichtung der Ablagefläche 13 bewegt. Die Haupteinheit 25 ist an der Vorderseite der Stützvorrichtung 21 angeordnet und kommt oberhalb der Ablagefläche 13 zu liegen. Durch die Bewegung in Längsrichtung der Ablagefläche kann die Haupteinheit die nebeneinander angeordneten Einspannvorrichtungen der Ablagefläche und die darin aufgenommenen Behälter bedienen.

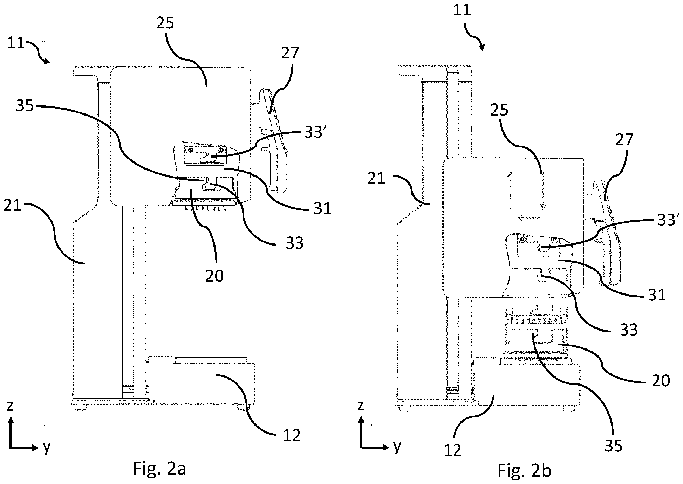

Die Haupteinheit 25 ist an den Seitenflächen der Stützvorrichtung 21 geführt. Somit ist die Vorderseite der Stützvorrichtung durch eine glatte Oberfläche geschlossen, was gleichzeitig einen Klemmschutz für die Vorderseite der Stützvorrichtung bietet. In Figur 2a ist eine Seitenansicht des Pipettiergeräts 11 aus Figur 1 gezeigt. In der Haupteinheit 25 ist ein Teil der Seitenwand transparent gestaltet, so dass ein Blick in das Innere der Haupteinheit 25 ermöglicht ist. Die transparente Stelle der Haupteinheit 25 weist eine Aufnahmevorrichtung 31 für einen Pipettierkopf 20 auf, wobei in der Figur ein Pipettierkopf 20 durch die Aufnahmevorrichtung 31 der Haupteinheit aufgenommen ist. Die Haupteinheit 25 befindet sich an der Stützvorrichtung 21 auf der höchsten Position und weist somit den grösstmöglichen Abstand zur Ablagefläche 13 auf. Die Bewegung der Haupteinheit 25 nach oben ist aufgrund der Führungen an den Seitenflächen der Stützvorrichtung 21 mechanisch begrenzt. Die Aufnahmevorrichtung 31 der Haupteinheit umfasst je zwei übereinander angeordnete Hakenelemente 33, 33'. Die Hakenelemente 33 weisen jeweils einen gebogenen Haken auf, welcher in Y-Richtung eine Biegung aufweist, so dass die Öffnung des Hakens in Y-Richtung bzw. zur Stützvorrichtung 21 hin gerichtet ist. Wichtig ist dabei, dass die Öffnung der beiden übereinander angeordneten Haken in dieselbe Richtung gerichtet ist. In der in Figur 2 gezeigten Ausführung sind die Haken derart übereinander angeordnet, dass sie in etwa die gleiche Distanz zur Stützvorrichtung 21 aufweisen.

Die Aufnahmevorrichtung 31 der Haupteinheit eines erfindungsmässigen Pipettiergeräts ist in der Lage in Y-Richtung bewegt zu werden. Die Bewegung der Aufnahmevorrichtung 31 kann über das Bedienelement 27 der Haupteinheit gesteuert oder durch ein vorab in der Haupteinheit abgelegtes Programm automatisch durchgeführt werden. In der in Figur 2 gezeigten Ausführung kommt die Bewegung der Aufnahmevorrichtung 31 durch die relative Bewegung der Aufnahmevorrichtung 31 gegenüber der Haupteinheit 25 zustande. Alternativ kann die Haupteinheit 25 in Y-Richtung bewegt werden, wodurch die Aufnahmevorrichtung 31 darin ebenfalls in Y-Richtung bewegt wird.

Die Bewegung in Y-Richtung ermöglicht in Kombination mit den Hakenelementen 33 an der Aufnahmevorrichtung 31 die Aufnahme von Pipettierköpfen 20 in die Haupteinheit 25. Der aufzunehmende Pipettierkopf 20 umfasst seitlich angeordnete Halteelemente 35, welche jeweils mit den Hakenelementen 33 der Aufnahmevorrichtung eine lösbare Verbindung eingehen können. Idealerweise kommt es zu einem Rastverschluss, welcher durch die Gewichtskraft des Pipettierkopfs 20 erzeugt wird.

In Figur 2b ist das Pipettiergerät 11 mit einer leeren Haupteinheit 25 gezeigt. Der durch die Haupteinheit aufzunehmende Pipettierkopf 20 liegt auf der Auflagefläche auf. Durch einen Bewegungsablauf, wie er durch drei Pfeile in der Figur gezeigt ist, kann die Aufnahmevorrichtung 25 den Pipettierkopf 20 aufnehmen.

Der Vorgang zur Aufnahme als auch zur Abgabe des Pipettierkopfs 20 durch die Haupteinheit 25 kann automatisch vorgenommen werden. Die Haupteinheit 25 bestimmt aufgrund der darin enthaltenen Informationen, wie gross die Auslenkung in Y-Richtung sein muss, um den jeweiligen Pipettierkopf 20 aufzunehmen.

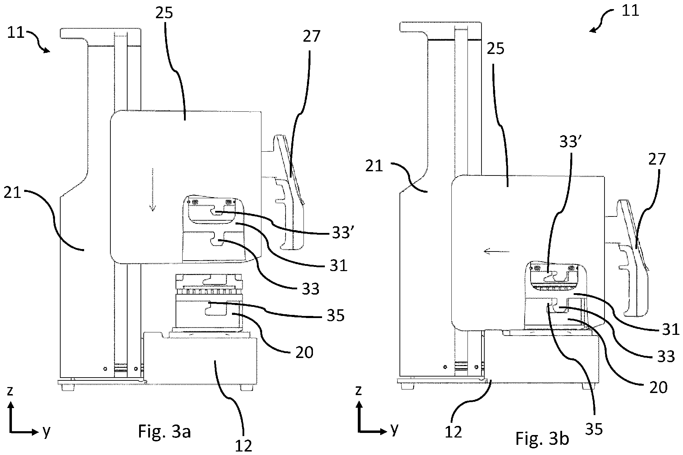

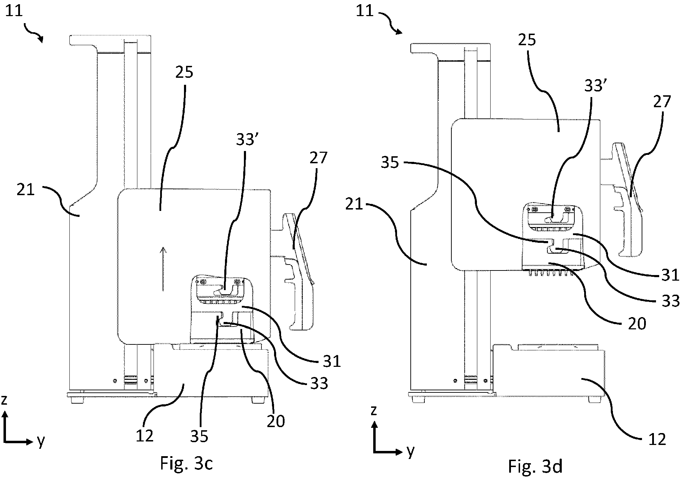

Im Folgenden wird der Vorgang zur Aufnahme eines Pipettierkopfes 20 in Figur 3 schrittweise erklärt:
- In der Ausgangslage ist der Pipettierkopf 20 in der Einspannvorrichtung 15 auf der Ablagefläche 13 der Ablagevorrichtung 12 platziert. Die Haupteinheit 25 des Pipettiergeräts 11 befindet sich oberhalb des Pipettierkopfes 20. Allenfalls muss die Haupteinheit 25 entlang der Längsseite der Ablagefläche 13 bewegt werden, damit die Haupteinheit 25 genau oberhalb des aufzunehmenden Pipettierkopfes 20 zu liegen kommt.
- Für die Aufnahme des Pipettierkopfes 20 muss die Haupteinheit 25 eine Bewegung nach unten und eine Vorwärts- und Rückwärtsbewegung in Y-Richtung vornehmen, siehe Figur 3a. Die Vorwärtsbewegung in Y-Richtung, also jene weg von der Stützvorrichtung 21, kann vor oder gleichzeitig mit der Bewegung nach unten vorgenommen werden. Wichtig ist, dass die Vorwärtsbewegung in Y-Richtung abgeschlossen ist, bevor die Haupteinheit 25 den Pipettierkopf 20 erreicht.
- An der untersten Position der Haupteinheit 25 ist der Pipettierkopf 20 darin bereits eingeführt. Durch die Bewegung der Haupteinheit 25 in Richtung der Stützvorrichtung 21 wie in Figur 3b, greifen die Hakenelemente 33 der Aufnahmevorrichtung 31 in die Haltelemente 35 des Pipettierkopfes 20 ein. Bei Bewegen der Haupteinheit 25 nach oben wie in Figur 3c kommt es zu einem Formschluss zwischen den Hakenelementen 33 und den Haltelementen 33 und als Folge davon ist der Pipettierkopf 20 mit der Haupteinheit 25 verbunden und bewegt sich mit der Haupteinheit mit.
- Die Haupteinheit 25 aus Figur 3d kann mit dem Pipettierkopf 20 darin den Vorgang zur Pipettierung starten. Hierfür kann der Pipettierkopf 20 in alle drei Achsen-Richtungen bewegt werden, wobei sich der Pipettierkopf 20 stets oberhalb der Ablagefläche 13 befindet.
- Für die Abgabe des Pipettierkopfes 20 platziert sich die Hautpeinheit 25 oberhalb einer Einspannvorrichtung 15 der Ablagefläche 13, so dass nach einer Abwärtsbewegung der Haupteinheit 25 der Pipettierkopf 20 auf der Ablagefläche 13 und in einer Einspannvorrichtung 15 zu liegen kommt. Nachdem der Pipettierkopf 20 auf der Ablagefläche 13 aufliegt, kann die Aufnahmevorrichtung 31 vorwärts in Y-Richtung bewegt werden, wodurch das Hakenelement 33 der Aufnahmevorrichtung 31 aus dem Halteelement 35 des Pipettierkopfes 20 entfernt und zugleich die Verbindung zwischen den beiden Bauteilen gelöst wird. Anschliessend ist die Aufnahmevorrichtung 31 bereit einen weiteren Pipettierkopf 20 aufzunehmen.

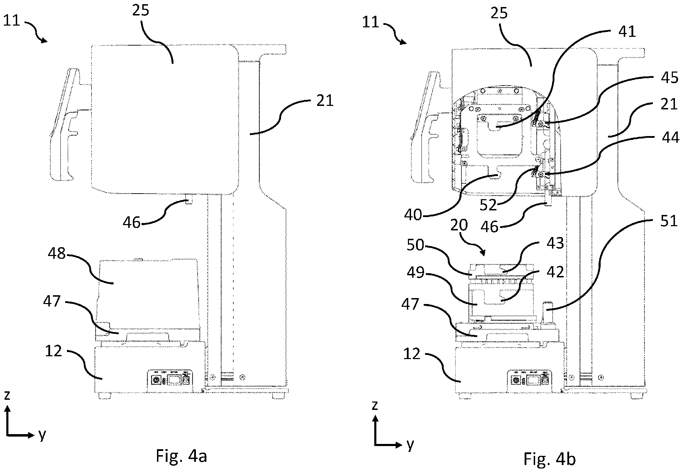

Figuren 4a bis 4h zeigen nochmals detaillierter die vorangehend beschriebene Ausführungsform des Pipettiergeräts 11 und des Pipettierkopfes 20 sowie eine mögliche Ausbildung von Koppel-Elementen 40, 41, Koppel-Element-Gegenstücken 42, 43, Verriegelungselementen 44, 45 und Entriegelungskomponente 46.

Figur 4a zeigt eine Seitenansicht des Pipettiergeräts 11 wie vorhergehend beschrieben, wobei hier ein Pipettierkopf 20 zur Aufnahme in das Pipettiergerät 11 auf der Ablagevorrichtung 12 angeordnet ist. Der Pipettierkopf 20 ist in einem Adapter 47 angeordnet, der derart konfiguriert ist, dass er mit der Ablagevorrichtung 12 so zusammenwirkt, dass eine Bewegung des Adapters 47 in Y-Richtung blockiert ist. Der Adapter 47 seinerseits blockiert eine Bewegung des in ihm aufgenommenen Pipettierkopfs 20 in Y-Richtung.

Wie in der Figur dargestellt kann der Adapter 47 mit einem Deckel 48 kombiniert sein, so dass bei auf dem Adapter 47 aufgesetztem Deckel 48 der Pipettierkopf 20 vollständig durch den Adapter 47 und den Deckel 48 umschlossen ist. Somit kann der ausgebaute Pipettierkopf 20 sicher gelagert und transportiert werden. Beispielsweise ist der Deckel 48 und/oder der Adapter 47 derart ausgelegt, dass mehrere solche Adapter-Deckel-Pipettierkopf Kombinationen zur Lagerung oder für den Transport übereinander gestapelt werden können. Insbesondere sind Adapter 47 und Deckel 48 derart geformt und aufeinander abgestimmt, dass sie beim Stapeln übereinander einen Formschluss bilden, so dass zumindest eine gegenseitige Bewegung in X- und Y-Richtung unterbunden ist.

Wie in Figur 4b dargestellt, wird zur Aufnahme des Pipettierkopfes 20 in das Pipettiergerät 11 zunächst der Deckel 48 entfernt. In der Figur ist ein Teil der Seitenwand der Haupteinheit 25 transparent gestaltet, so dass ein Blick in das Innere der Haupteinheit 25 ermöglicht ist.

Der Pipettierkopf 20 weist ein Unterteil 49 und ein Oberteil 50 auf und ist konfiguriert, dass das Oberteil 50 zum Pipettieren von Pipetten-Spitzen des Pipettierkopfes 20 relativ zum Unterteil 49 nach oben weg bewegt werden kann. Sowohl Ober- wie Unterteil weisen auf der linken und der rechten Seite Koppel-Element-Gegenstücke 42, 43 auf, im folgenden untere Koppel-Element-Gegenstücke 42 und obere Koppel-Element-Gegenstücke 43 bezeichnet (vorangehend auch Koppel-Element-Gegenstücke und über diesen angeordnete weitere Koppel-Element-Gegenstücke genannt). In der gezeigten Ausführungsform sind die unteren und oberen Koppel-Element-Gegenstücke 42, 43 jeweils durch hakenförmige Aufnahmen bereitgestellt, wobei jede der hakenförmigen Aufnahmen durch eine nach oben offene und sich in vertikaler Richtung zur Unterseite hin erstreckende Schenkel-Öffnung und eine sich von dieser Schenkel-Öffnung in horizontaler Richtung weg erstreckende und nach oben geschlossene Einführ-Öffnung gebildet ist.

Die Haupteinheit 25 weist die vorangehend beschriebene Aufnahmevorrichtung auf. Diese weist auf die unteren und oberen Koppel-Element-Gegenstücke 42, 43 abgestimmte untere Koppel-Elemente 40 und obere Koppel-Elemente 41 auf (vorangehend auch Koppel-Elemente und über diesen angeordnete weitere Koppel-Elemente genannt). In der gezeigten Ausführungsform ist jedes der unteren bzw. oberen Koppel-Elemente 40, 41 jeweils Teil eines Hakenelements der Aufnahmevorrichtung, wobei jedes der Hakenelemente einen sich in vertikaler Richtung zur Ablagefläche hin erstreckenden Schenkel aufweist und die unteren bzw. oberen Koppel-Elemente 40, 41 sich in der horizontalen Eingriff-Richtung vom Schenkel weg (hier zur Stützvorrichtung 21 hin) erstrecken.

Für die Aufnahme des Pipettierkopfes 20 in das Pipettiergerät 11 können die Koppel-Elemente 40, 41 somit mittels einer zunächst erfolgenden Abwärtsbewegung und einer anschliessenden in Eingriffs-Richtung erfolgenden Horizontalbewegung (hier in Richtung Stützvorrichtung 21) in die Einführ-Öffnungen einfahren, um so den Pipettierkopf 20 anzuheben.

In der Figur ist ferner eine unten aus der Haupteinheit 25 hinausragende Entriegelungskomponente 46 sichtbar, welche derart angeordnet ist, dass sie beim Absenken der Haupteinheit 25 auf ein in der gezeigten Ausführungsform durch den Adapter 47 bereitgestelltes Blockier-Gegenstück 51 trifft und von diesem blockiert wird.

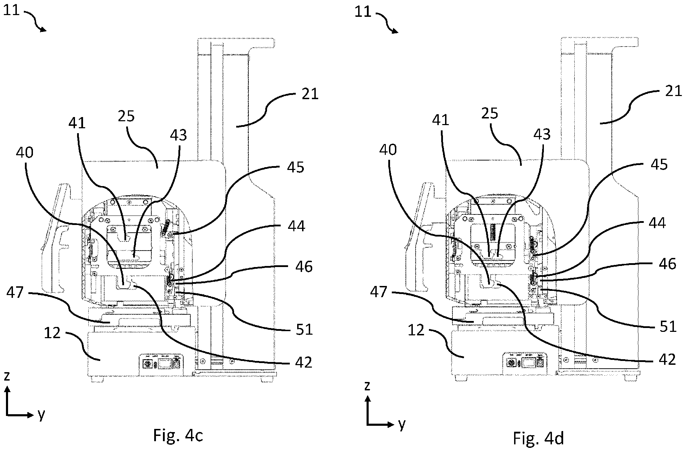

Zudem sind jeweils in der Haupteinheit 25 angeordnete untere und obere Verriegelungselemente 44, 45 der Aufnahmevorrichtung sichtbar (vorangehend auch Verriegelungselement und über diesem angeordnetes weiteres Verriegelungselement genannt). Beide Verriegelungselemente 44, 45 sind in der gezeigten Figur in der Fixierstellung angeordnet. Jedes der Verriegelungselemente 44, 45 ist hier beispielhaft mittels eines um eine Drehachse drehbar gelagerten Stiftes bereitgestellt, wobei die Drehachse parallel zur X-Richtung ist und der Stift mit einem Federelement 52 in die Fixierstellung vorgespannt ist. In der Fixierstellung ist die Längsachse des Stiftes, wie in der Figur dargestellt, horizontal ausgerichtet. In der Offenstellung ist die Längsachse des Stifts, wie in der Figur 4d dargestellt, vertikal ausgerichtet.

In der Figur 4c hat sich die Haupteinheit 25 zur Ablagevorrichtung 12 hin über den Pipettierkopf 20 abgesenkt, wobei eine weitere Abwärtsbewegung der Entriegelungskomponente 46 durch den Kontakt mit dem Blockier-Gegenstück 51 des Adapters 47 blockiert wurde, so dass sich die Entriegelungskomponente 46 relativ zur Aufnahmevorrichtung nach oben bewegt hat. Diese Bewegung der Entriegelungskomponente 46 wiederum hat das untere Verriegelungselement 44 von der Fixierstellung in die Offenstellung überführt. In der dargestellten Ausführungsform wurde dies dadurch bewirkt, dass die Entriegelungskomponente 46 auf den hinteren Teil des Stiftes des unteren Verriegelungselements 44 eingewirkt und somit ein Drehen des Stifts um seine Drehachse in eine vertikale Ausrichtung des Stiftes bewirkt hat.

Figur 4d zeigt als weiteren Schritt ein Absenken der oberen Koppel-Elemente 41, z.B. mittels des für die Pipettierbewegung vorgesehenen Antriebs. Eine sich mit der Vertikalbewegung der oberen Koppel-Elemente 41 mitbewegende weitere Entriegelungskomponente hat dabei auf den vorderen Teil des Stiftes des oberen Verriegelungselements 45 eingewirkt und somit ein Drehen des Stifts um seine Drehachse in eine vertikale Ausrichtung des Stiftes bewirkt.

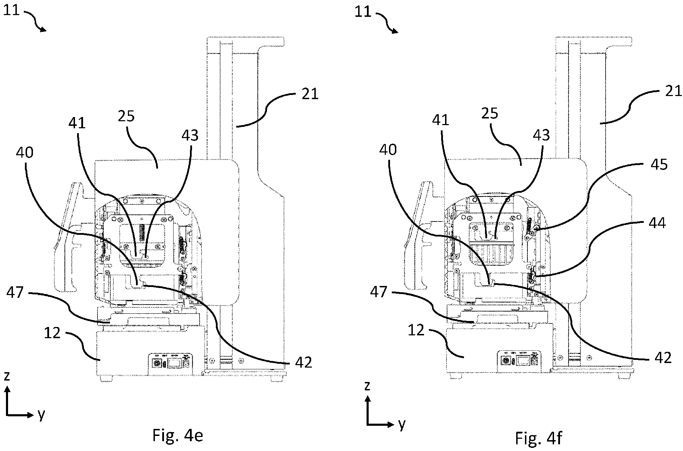

Figur 4e zeigt als weiteren Schritt eine horizontale Bewegung der Aufnahmevorrichtung in Richtung Stützvorrichtung 21, wodurch die unteren und oberen Koppel-Elemente 40, 41 in Eingriff mit den unteren und oberen Koppel-Element-Gegenstücken 42, 43 geraten sind.

Figur 4f zeigt als weiteren Schritt zunächst ein Anheben des Oberteils des Pipettierkopfs, wodurch die weitere Entriegelungskomponente den Stift des oberen Verriegelungselements 45 wieder freigibt und sich das obere Verriegelungselement 45 wieder in die vorgespannte Fixierstellung bewegt.

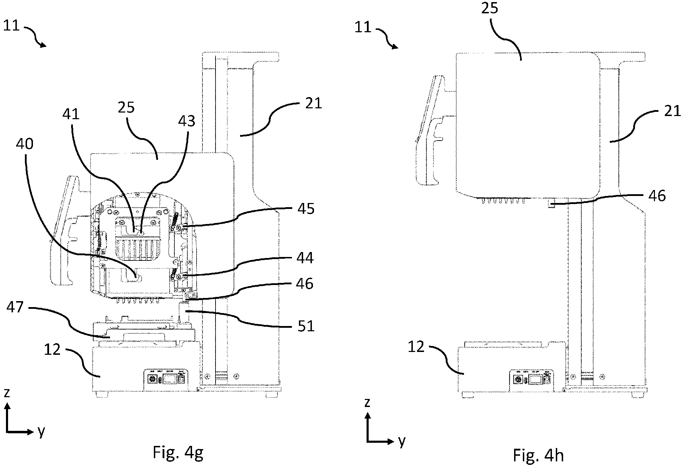

Figur 4g zeigt die Situation nach dem Anheben der Haupteinheit 25 bis zu dem Punkt, dass die Entriegelungskomponente 46 des unteren Verriegelungselements 44 sich wieder vom Blockier-Gegenstück 51 des Adapters 47 gelöst hat, so dass sich auch das untere Verriegelungselement 44 wieder in seine vorgespannte Fixierstellung bewegt hat.

Durch den Eingriff der Koppel-Elemente 40, 41 in die Koppel-Element-Gegenstücke 42, 43 und die gleichzeitig in der Fixierstellung angeordneten Verriegelungselemente 44, 45 ist der Pipettierkopf nun formschlüssig in der Haupteinheit 25 aufgenommen und kann von dieser zum Pipettieren in X- und Z-Richtung hin und her bewegt werden. Hierzu wird der Adapter 47, wie in der Figur 4h dargestellt, von der Ablagevorrichtung 12 entfernt, so dass auf der Ablagefläche ein eine Flüssigkeit enthaltender Behälter und eine Mikrotierplatte angeordnet werden können (nicht dargestellt).

Während vorstehend spezifische Ausführungsformen beschrieben wurden, ist es offensichtlich, dass unterschiedliche Kombinationen der aufgezeigten Ausführungsmöglichkeiten angewendet werden können, insoweit sich die Ausführungsmöglichkeiten nicht gegenseitig ausschliessen.

### BEZUGSZEICHENLISTE:

- 11: Pipettiergerät
- 12: Ablagevorrichtung
- 13: Ablagefläche
- 15: Einspannvorrichtung
- 17: Rand von Einspannvorrichtung
- 20: Pipettierkopf
- 21: Stützvorrichtung
- 25: Haupteinheit
- 27: Bedieneinheit
- 31: Aufnahmevorrichtung
- 33: Hakenelement
- 35: Halteelement
- 40: Unteres Koppel-Element
- 41: Oberes Koppel-Element
- 42: Unteres Koppel-Element-Gegenstück
- 43: Oberes Koppel-Element-Gegenstück
- 44: Unteres Verriegelungselement
- 45: Oberes Verriegelungselement
- 46: Entriegelungskomponente
- 47: Adapter
- 48: Deckel für Adapter
- 49: Unterteil des Pipettierkopfes
- 50: Oberteil des Pipettierkopfes
- 51: Blockier-Gegenstück
- 52: Federelement

## Patentansprüche

1. Pipettiergerät (11) zur automatischen Aufnahme und/oder Abgabe eines Pipettierkopfes (20), wobei
das Pipettiergerät (11) eine Plattform mit einer Ablagefläche (13), eine Stützvorrichtung (21) und eine an der Stützvorrichtung (21) angeordnete Haupteinheit (25) aufweist,
die Ablagefläche (13) zur Aufnahme von Laborbehältern vorgesehen ist, und die Haupteinheit (25) oberhalb der Ablagefläche (13) angeordnet ist,
**dadurch gekennzeichnet, dass**
die Haupteinheit (25) eine Öffnung an der unteren Seite mit einer Aufnahmevorrichtung (31) zur Aufnahme eines Pipettierkopfes (20) aufweist, wobei das Pipettiergerät (11) konfiguriert ist, dass der Pipettierkopf (20) durch Einführen durch die Öffnung in der Haupteinheit (25) aufgenommen wird, wozu die Aufnahmevorrichtung (31) relativ zur Ablagefläche (13) in die drei Koordinaten-Achsen-Richtungen (X, Y und Z) bewegbar ist.

2. Pipettiergerät (11) nach Anspruch 1, wobei die Haupteinheit (25) von der Stützvorrichtung (21) in Y-Richtung absteht und die Haupteinheit (25) zur Aufnahme und/oder Abgabe des Pipettierkopfes (20) in Z- und Y-Richtung bewegbar ist.

3. Pipettiergerät (11) nach einem der vorhergehenden Ansprüche, wobei die Aufnahmevorrichtung (31) ausgebildet ist, die Aufnahme des Pipettierkopfes (20) mittels Formschluss bereitzustellen,
insbesondere wobei die Aufnahmevorrichtung (31) Hakenelemente (33) zur Bildung des Formschlusses aufweist.

4. Pipettiergerät (11) nach einem der vorhergehenden Ansprüche, wobei die Aufnahmevorrichtung (31) sich horizontal erstreckende Koppel-Elemente (40) aufweist, die konfiguriert sind, dass sie in einer horizontalen Eingriff-Richtung mit sich ebenfalls horizontal erstreckenden Koppel-Element-Gegenstücken (42) des Pipettierkopfes (20) in Eingriff treten bzw. sich in entgegengesetzter Richtung von diesen Koppel-Element-Gegenstücken (42) lösen können, wobei die Aufnahmevorrichtung (31) konfiguriert ist, um zur Aufnahme bzw. Abgabe des Pipettierkopfes (20) relativ zur Ablagefläche (13) eine Bewegung in bzw. entgegen der horizontalen Eingriff-Richtung durchzuführen, wobei sich die Koppel-Elemente (40) mit der Aufnahmevorrichtung (31) mitbewegen.

5. Pipettiergerät (11) nach einem der vorhergehenden Ansprüche, wobei die Haupteinheit (25) ein Verriegelungselement (44) aufweist, welches konfiguriert ist, eine Verriegelungsstellung und eine Offenstellung einzunehmen, wobei ein Teil des Verriegelungselements (44) in der Fixierstellung gegenüber der Offenstellung näher an oder weiter in einem räumlichen Pipettierkopfbereich liegt, der bei aufgenommenem Pipettierkopf (20) von diesem eingenommen wird.

6. Pipettiergerät (11) nach Anspruch 5, wobei das Verriegelungselement (44) in die Fixierstellung vorgespannt ist und die Haupteinheit (25) eine relativ zur Aufnahmevorrichtung (31) in vertikaler Richtung verstellbare Entriegelungskomponente (46) aufweist, wobei die Haupteinheit (25) konfiguriert ist, dass eine vertikal nach oben erfolgte Verstellung der Entriegelungskomponente (46) relativ zur Aufnahmevorrichtung (31) das Verriegelungselement (44) von der Fixierstellung in die Offenstellung überführt und wobei die Entriegelungskomponente (46) derart angeordnet ist, dass diese während einer vertikalen Bewegung der Haupteinheit (25) zur Ablagefläche (13) hin von einem relativ zur Ablagefläche (13) fix angeordneten Blockier-Gegenstück (51) blockierbar ist.

7. Pipettiergerät (11) nach Ansprüchen 4 und 6, wobei das Pipettiergerät (11) konfiguriert ist um zur Aufnahme des Pipettierkopfes (20)
• die Haupteinheit (25) zunächst in Richtung der Ablagefläche (13) zu bewegen bis das Verriegelungselement (44) durch eine vertikal nach oben erfolgte Verstellung der Entriegelungskomponente (46) relativ zur Aufnahmevorrichtung (31) von der Fixierstellung in die Offenstellung überführt ist,
• anschliessend die Aufnahmevorrichtung (31) in der horizontalen Eingriff-Richtung zu verschieben, und
• anschliessend eine Anhebe-Bewegung der Haupteinheit (25) durchzuführen, bei der die Haupteinheit (25) in Richtung von der Ablagefläche (13) weg nach oben bewegt wird, bis sich das in die Fixierstellung vorgespannte Verriegelungselement (44) zurück in die Fixierstellung bewegt hat.

8. Pipettiergerät (11) nach Anspruch 7, wobei
• die Aufnahmevorrichtung (31) oberhalb der Koppel-Elemente (40) weitere horizontal erstreckende Koppel-Elemente (41) aufweist, die konfiguriert sind, dass sie in der horizontalen Eingriff-Richtung mit sich ebenfalls horizontal erstreckenden weiteren Koppel-Element-Gegenstücken (43) des Pipettierkopfes (20) in Eingriff treten bzw. sich in entgegengesetzter Richtung von diesen weiteren Koppel-Element-Gegenstücken (43) lösen können, wobei die weiteren Koppel-Elemente (41) in vertikaler Richtung relativ zu den unter ihnen angeordneten Koppel-Elementen (40) bewegbar sind,
• oberhalb des Verriegelungselements (44) ein weiteres Verriegelungselement (45) angeordnet ist, welches konfiguriert ist, eine Verriegelungsstellung und eine Offenstellung einzunehmen, wobei ein Teil des weiteren Verriegelungselements (45) in der Fixierstellung gegenüber der Offenstellung näher am oder weiter im Pipettierkopfbereich liegt und das weitere Verriegelungselement (45) in die Fixierstellung vorgespannt ist und durch eine Bewegung der weiteren Koppel-Elemente (41) hin zu den unter ihnen angeordneten Koppel-Elementen (40) von der Fixierstellung in die Offenstellung überführt wird, und
• die Haupteinheit (25) konfiguriert ist, die weiteren Koppel-Elemente (41) unabhängig von, insbesondere vor, der Anhebe-Bewegung der Haupteinheit (25) in vertikaler Richtung von den unter ihnen angeordneten Koppel-Elementen (40) weg zu bewegen, bis sich das in seine Fixierstellung vorgespannte weitere Verriegelungselement (45) zurück in die Fixierstellung bewegt hat.

9. Pipettiergerät (11) nach einem der vorhergehenden Ansprüche, **dadurch gekennzeichnet, dass** ein Adapter (47) auf der Ablagefläche (13) zur Aufnahme von Laborbehältern angeordnet ist.

10. Pipettiergerät (11) nach Anspruch 9, wobei die Ablagefläche (13) und der Adapter (47) konfiguriert sind, dass der Adapter in X- und Y-Richtung fix auf der Ablagefläche (13) angeordnet und dazu konfiguriert ist, den Pipettierkopf (20) aufzunehmen und in X- und Y-Richtung zu fixieren.

11. Pipettiergerät (11) nach Anspruch 6 und Anspruch 10, wobei der Adapter (47) das Blockier-Gegenstück (51) aufweist.

12. Pipettierkopf (20) der konfiguriert ist, um in ein Pipettiergerät (11) gemäss einem der vorhergehenden Ansprüche aufgenommen zu werden, wobei der Pipettierkopf (20) eine Ober- und eine Unterseite, eine Vorder- und eine Rückseite, und eine rechte und eine linke Seite aufweist, wobei für eine Aufnahme in das Pipettiergerät (11) die Vorderseite zum Pipettiergerät (11) hin und die Rückseite vom Pipettiergerät (11) weg, die Oberseite nach oben und die Unterseite nach unten, und die linke und die rechte Seite jeweils in Richtungen quer zum Pipettiergerät (11) gerichtet sind, wobei
der Pipettierkopf (20) auf seiner linken und auf seiner rechten Seite, oder auf seiner Vorder- und auf seiner Rückseite, jeweils sich horizontal erstreckende Koppel-Element-Gegenstücke (42) aufweist, die konfiguriert sind, um mit darauf abgestimmten und sich in eine horizontale Eingriff-Richtung bewegenden horizontal erstreckenden Koppel-Elementen (40) des Pipettiergeräts in Eingriff zu treten bzw. sich wieder von den Koppel-Elementen (40) des Pipettiergeräts (11) zu lösen, wenn die Koppel-Elemente (40) sich entgegen der horizontalen Eingriff-Richtung bewegen.

13. Pipettierkopf (20) nach Anspruch 12, wobei der Pipettierkopf (20) ein Ober- und ein Unterteil (49, 50) aufweist und konfiguriert ist, dass das Oberteil (50) relativ zum Unterteil (49) vertikal nach oben weg bewegbar ist, wobei die Koppel-Element-Gegenstücke (42) am Unterteil (49) angeordnet sind und das Oberteil (50) auf seiner linken und auf seiner rechten Seite, oder auf seiner Vorder- und auf seiner Rückseite, jeweils weitere Koppel-Element-Gegenstücke (43) aufweist, die konfiguriert sind, um mit darauf abgestimmten und sich in die horizontale Eingriff-Richtung bewegenden horizontal erstreckenden weiteren Koppel-Elementen (41) des Pipettiergeräts (11) in Eingriff zu treten bzw. sich wieder von den weiteren Koppel-Elementen (41) des Pipettiergeräts (11) zu lösen, wenn die weiteren Koppel-Elemente (41) sich entgegen der horizontalen Eingriff-Richtung bewegen.

14. Set aus einem Pipettiergerät (11) nach einem der Ansprüche 1 bis 11 und einem Pipettierkopf (20) nach einem der Ansprüche 12 bis 13.

15. Verfahren zur Aufnahme eines Pipettierkopfes (20) durch ein Pipettiergerät (11) gemäss einem der Ansprüche 1 bis 11, wobei die Aufnahmevorrichtung (31) den Pipettierkopf (20) durch eine Bewegung in zwei zueinander senkrechten Richtungen aufnimmt.

## Claims

1. Pipetting device (11) for automatically receiving and/or dispensing a pipetting head (20), wherein
the pipetting device (11) comprises a platform with a storage surface (13), a support device (21) and a main unit (25) arranged on the support device (21),
the storage surface (13) is provided for receiving laboratory containers, and
the main unit (25) is arranged above the storage surface (13),
**characterized in that**
the main unit (25) has an opening on the lower side with a receiving device (31) for receiving a pipetting head (20), wherein the pipetting device (11) is configured such that the pipetting head (20) is received by insertion through the opening in the main unit (25), for which the receiving device (31) is movable relative to the storage surface (13) in the three coordinate axis directions (X, Y and Z).

2. Pipetting device (11) according to Claim 1, wherein the main unit (25) protrudes from the support device (21) in the Y direction and the main unit (25) is movable in the Z and Y directions for receiving and/or dispensing the pipetting head (20).

3. Pipetting device (11) according to any one of the preceding claims, wherein the receiving device (31) is designed to provide the receiving of the pipetting head (20) by means of a form lock,
in particular wherein the receiving device (31) comprises hook elements (33) for forming the form lock.

4. Pipetting device (11) according to any one of the preceding claims, wherein the receiving device (31) comprises horizontally extending coupling elements (40), that are configured such that they can engage in a horizontal engagement direction with likewise horizontally extending coupling element counterparts (42) of the pipetting head (20) or can detach from these coupling element counterparts (42) in the opposite direction, wherein the receiving device (31) is configured to carry out a movement in or against the horizontal engagement direction relative to the storage surface (13) for receiving or releasing the pipetting head (20), wherein the coupling elements (40) move along with the receiving device (31).

5. Pipetting device (11) according to any one of the preceding claims, wherein the main unit (25) comprises a locking element (44) configured to assume a locking position and an open position, wherein a part of the locking element (44) in the locking position relative to the open position is closer to or further in a spatial pipetting head region occupied by said pipetting head when the pipetting head (20) is received.

6. Pipetting device (11) according to Claim 5, wherein the locking element (44) is pre-tensioned into the locking position and the main unit (25) comprises a release component (46) adjustable in a vertical direction relative to the receiving device (31), wherein the main unit (25) is configured such that a vertically upward adjustment of the release component (46) relative to the receiving device (31) transitions the locking element (44) from the locking position into the open position and wherein the release component (46) is arranged such that it can be blocked by a blocking counterpart (51) that is fixedly arranged relative to the storage surface (13) during a vertical movement of the main unit (25) towards the storage surface (13).

7. Pipetting device (11) according to Claims 4 and 6, wherein the pipetting device (11) is configured such as to receive the pipetting head (20)
• the main unit (25) initially moves in the direction of the storage surface (13) until the locking element (44) is transferred from the locking position to the open position by a vertically upward adjustment of the release component (46) relative to the receiving device (31),
• then the receiving device (31) is moved in the horizontal engagement direction, and
• subsequently, the main unit (25) carries out a lifting movement, in which the main unit (25) is moved upwards in the direction away from the storage surface (13) until the locking element (44), which is pre-tensioned into the locking position, has moved back into the locking position.

8. Pipetting device (11) according to Claim 7, wherein
• the receiving device (31) comprises further horizontally extending coupling elements (41) above the coupling elements (40), that are configured such that they can engage in the horizontal engagement direction with further coupling element counterparts (43) of the pipetting head (20) that also extend horizontally or can detach in the opposite direction from these further coupling element counterparts (43), wherein the further coupling elements (41) are movable in a vertical direction relative to the coupling elements (40) arranged below them,
• a further locking element (45) is arranged above the locking element (44), which is configured to assume locking position and an open position, wherein a part of the further locking element (45) is closer to or further in the area of the pipetting head in the locking position compared to the open position and the further locking element (45) is pre-tensioned into the locking position and is transferred from the locking position to the open position by a movement of the further coupling elements (41) towards the coupling elements (40) arranged below them, and
• the main unit (25) is configured to move the further coupling elements (41) independently of, in particular before, the lifting movement of the main unit (25) in a vertical direction away from the coupling elements (40) arranged below them until the further locking element (45) that is pre-tensioned into its locking position has moved back into the fixed position.

9. Pipetting device (11) according to any one of the preceding claims, **characterized in that** an adapter (47) is arranged on the storage surface (13) for receiving laboratory containers.

10. Pipetting device (11) according to Claim 9, wherein the storage surface (13) and the adapter (47) are configured such that the adapter is fixed arranged on the storage surface (13) in the X and Y directions and configured to receive and fix the pipetting head (20) in the X and Y directions.

11. A pipetting device (11) according to Claim 6 and Claim 10, wherein the adapter (47) comprises the blocking counterpart (51).

12. Pipetting head (20) configured to be received in a pipetting device (11) according to any one of the preceding claims, wherein the pipetting head (20) comprises a top and a bottom, a front and a back, and has a right side and a left side, wherein, for receiving in the pipetting device (11), the front side is directed towards the pipetting device (11) and the back side is directed away from the pipetting device (11), the top is directed upwards and the bottom downwards, and the left and right sides are respectively directed in directions transverse to the pipetting device (11), wherein
the pipetting head (20) comprises on its left and right side, or on its front and back side, horizontally extending coupling element counterparts (42), that are configured to engage with the horizontally extending coupling elements (40) of the pipetting device which are matched thereto and move in a horizontal engagement direction, or to detach again from the coupling elements (40) of the pipetting device (11) when the coupling elements (40) move against the horizontal engagement direction.

13. Pipetting head (20) according to Claim 12, wherein the pipetting head (20) comprises an upper part and a lower part (49, 50) and is configured such that the upper part (50) can be moved vertically upwards relative to the lower part (49), wherein the coupling element counterparts (42) are arranged on the lower part (49) and the upper part (50) has further coupling element counterparts (43) on its left and right side, or on its front and rear side, which are configured to engage with horizontally extending further coupling elements (41) of the pipetting device (11) that are matched thereto and move in the horizontal engagement direction, or to disengage again from the further coupling elements (41) of the pipetting device (11) when the further coupling elements (41) move against the horizontal engagement direction.

14. Set comprising a pipetting device (11) according to any one of Claims 1 to 11 and a pipetting head (20) according to any one of Claims 12 to 13.

15. Method for receiving a pipetting head (20) by a pipetting device (11) according to any one of Claims 1 to 11, wherein the receiving device (31) receives the pipetting head (20) by a movement in two mutually perpendicular directions.

## Revendications

1. Appareil de pipetage (11), destiné à recevoir et / ou à distribuer automatiquement une tête de pipetage (20),
l'appareil de pipetage (11) comportant une plateforme, dotée d'une surface de dépose (13), un dispositif de support (21) et une unité principale (25), placée sur le dispositif de support (21),
la surface de dépose (13) étant prévue pour recevoir des récipients de laboratoire et l'unité principale (25) étant placée au-dessus de la surface de dépose (13),
**caractérisé en ce que**
l'unité principale (25) présente sur la face inférieure un orifice doté d'un dispositif de réception (31), destiné à recevoir une tête de pipetage (20), l'appareil de pipetage (11) étant configuré de sorte que la tête de pipetage (20) soit reçue par introduction à travers l'orifice dans l'unité principale (25), à cet effet, le dispositif de réception (31) étant déplaçable par rapport à la surface de dépose (13) dans les directions des trois axes de coordonnées (X, Y et Z).

2. Appareil de pipetage (11) selon la revendication 1, l'unité principale (25) débordant du dispositif de support (21) dans la direction Y et l'unité principale (25) étant déplaçable dans la direction Z et dans la direction Y, pour recevoir et / ou pour distribuer la tête de pipetage (20).

3. Appareil de pipetage (11) selon l'une quelconque des revendications précédentes, le dispositif de réception (31) étant conçu pour mettre à disposition la réception de la tête de pipetage (20) au moyen d'une complémentarité de forme,
notamment le dispositif de réception (31) comportant des éléments en crochets (33), pour constituer la complémentarité de forme.

4. Appareil de pipetage (11) selon l'une quelconque des revendications précédentes, le dispositif de réception (31) comportant des éléments d'accouplement (40) s'étendant à l'horizontale, qui sont configurés de sorte à entrer en engagement dans une direction d'engagement horizontale avec des contreparties d'éléments d'accouplement (42) s'étendant également à l'horizontale de la tête de pipetage (20) ou à pouvoir se désolidariser dans une direction opposée desdites contreparties d'éléments d'accouplement (42), afin de recevoir ou de distribuer la tête de pipetage (20), le dispositif de réception (31) étant configuré pour réaliser par rapport à la surface de dépose (13) un déplacement dans ou à l'encontre de la direction d'engagement horizontale, les éléments d'accouplement (40) se déplaçant conjointement avec le dispositif de réception (31).

5. Appareil de pipetage (11) selon l'une quelconque des revendications précédentes, l'unité principale (25) comportant un élément de verrouillage (44), lequel est configuré pour adopter une position de verrouillage et une position ouverte, dans la position de fixation, une partie de l'élément de verrouillage (44) se situant par rapport à la position ouverte plus près de ou plus loin dans une zone spatiale de la tête de pipetage, qui est adoptée par celle-ci, lorsque la tête de pipetage (20) est reçue.

6. Appareil de pipetage (11) selon la revendication 5, l'élément de verrouillage (44) étant précontraint dans la position de fixation et l'unité principale (25) comportant un composant de déverrouillage (46) ajustable dans la direction verticale par rapport au dispositif de réception (31), l'unité principale (25) étant configurée de sorte qu'un ajustage effectué à la verticale vers le haut du composant de déverrouillage (46) par rapport au dispositif de réception (31) transfère l'élément de verrouillage (44) de la position de fixation dans la position ouverte et le composant de déverrouillage (46) étant placé de telle sorte que, pendant un déplacement vertical de l'unité principale (25) vers la surface de dépose (13), il soit susceptible d'être bloqué par une contrepartie de blocage (51) placée fixement par rapport à la surface de dépose (13).

7. Appareil de pipetage (11) selon les revendications 4 et 6, afin de recevoir la tête de pipetage (20), l'appareil de pipetage (11) étant configuré pour
• déplacer l'unité principale (25) d'abord dans la direction de la surface de dépose (13), jusqu'à ce que par un ajustage effectué à la verticale vers le haut du composant de déverrouillage (46) par rapport au dispositif de réception (31), l'élément de verrouillage (44) soit transféré de la position de fixation dans la position ouverte,
• décaler ensuite le dispositif de réception (31) dans la direction d'engagement horizontale et
• procéder ensuite à un déplacement en soulèvement de l'unité principale (25), lors duquel l'unité principale (25) est déplacée dans la direction en éloignement de la surface de dépose (13) vers le haut, jusqu'à ce que l'élément de verrouillage (44) précontraint dans sa position de fixation se soit déplacé en retour dans la position de fixation.

8. Appareil de pipetage (11) selon la revendication 7,
• le dispositif de réception (31) comportant au-dessus des éléments d'accouplement (40) des éléments d'accouplement (41) supplémentaires s'étendant à l'horizontale, qui sont configurés pour, dans la direction d'engagement horizontale, entrer en engagement avec des contreparties d'éléments d'accouplement (43) supplémentaires de la tête de pipetage (20), s'étendant également à l'horizontale ou pour pouvoir se désolidariser dans la direction opposée desdites contreparties d'éléments d'accouplement (43) supplémentaires, les éléments d'accouplement (41) étant déplaçables dans la direction verticale par rapport aux éléments d'accouplement (40) placés sous eux,
• au-dessus de l'élément de verrouillage (44) étant placé un élément de verrouillage (45) supplémentaire, lequel est configuré pour adopter une position de verrouillage et une position ouverte, dans la position de fixation, une partie de l'élément de verrouillage (45) supplémentaire se situant par rapport à la position ouverte plus près de ou plus loin dans la zone de la tête de pipetage et l'élément de verrouillage (45) supplémentaire étant précontraint dans la position de fixation et, par un déplacement des éléments d'accouplement (41) supplémentaires vers les éléments d'accouplement (40) placés sous eux, étant transféré de la position de fixation dans la position ouverte et
• l'unité principale (25) étant configurée pour déplacer les éléments d'accouplement (41) supplémentaires indépendamment de, notamment avant, le déplacement en soulèvement de l'unité principale (25) dans la direction verticale, en éloignement des éléments d'accouplement (40) placés sous eux, jusqu'à ce que l'élément de verrouillage (45) supplémentaire précontraint dans sa position de fixation se soit déplacé en retour dans la position de fixation.

9. Appareil de pipetage (11) selon l'une quelconque des revendications précédentes, **caractérisé en ce qu'**un adaptateur (47) est placé sur la surface de dépose (13), pour recevoir des récipients de laboratoire.

10. Appareil de pipetage (11) selon la revendication 9, la surface de dépose (13) et l'adaptateur (47) étant configurés de telle sorte que l'adaptateur soit fixement placé dans la direction X et dans la direction Y sur la surface de dépose (13) et soit configuré pour recevoir la tête de pipetage (20) et la fixer dans la direction X et dans la direction Y.

11. Appareil de pipetage (11) selon la revendication 6 et la revendication 10, l'adaptateur (47) comportant la contrepartie de blocage (51).

12. Tête de pipetage (20), qui est configurée pour être reçue dans un appareil de pipetage (11) selon l'une quelconque des revendications précédentes, la tête de pipetage (20) comportant une face supérieure et une face inférieure, une face antérieure et une face postérieure et un côté droit et un côté gauche, pour une réception dans l'appareil de pipetage (11), la face antérieure étant orientée vers l'appareil de pipetage (11) et la face postérieure étant orientée en éloignement de l'appareil de pipetage (11), la face supérieure étant orientée vers le haut et la face antérieure étant orientée vers le bas et le côté droit et le côté gauche étant orientés chacun dans des directions à la transversale de l'appareil de pipetage (11),
sur son côté gauche et sur son côté droit ou sur sa face antérieure et sur sa face postérieure, la tête de pipetage (20) comportant des contreparties d'éléments d'accouplement (42) s'étendant chacune à l'horizontale, qui sont configurées pour entrer en engagement avec des éléments d'accouplement (40) adaptés à elles de l'appareil de pipetage, s'étendant à l'horizontale et se déplaçant dans une direction d'engagement horizontale ou pour se désolidariser de nouveau des éléments d'accouplement (40) de l'appareil de pipetage (11), lorsque les éléments d'accouplement (40) se déplacent à l'encontre de la direction d'engagement horizontale.

13. Tête de pipetage (20) selon la revendication 12, la tête de pipetage (20) comportant une partie supérieure et une partie inférieure (49, 50) et étant configurée de sorte que la partie supérieure (50) soit déplaçable à la verticale vers le haut, en éloignement de la partie inférieure (49), les contreparties d'éléments d'accouplement (42) étant placées sur la partie inférieure (49) et sur son côté gauche et sur son côté droit ou sur sa face antérieure et sur sa face postérieure, la partie supérieure (50) comportant des contreparties d'éléments d'accouplement (43) respectivement supplémentaires, qui sont configurées pour entrer en engagement avec des éléments d'accouplement (41) supplémentaire, adaptés à elles de l'appareil de pipetage (11), s'étendant à l'horizontale et se déplaçant dans la direction d'engagement horizontale ou pour se désolidariser de nouveau des éléments d'accouplement (41) supplémentaires de l'appareil de pipetage (11), lorsque les éléments d'accouplement (41) supplémentaires se déplacent à l'encontre de la direction d'engagement horizontale.

14. Kit, constitué d'un appareil de pipetage (11) selon l'une quelconque des revendications 1 à 11 et d'une tête de pipetage (20) selon l'une quelconque des revendications 12 à 13.

15. Procédé, destiné à faire recevoir une tête de pipetage (20) par un appareil de pipetage (11) selon l'une quelconque des revendications 1 à 11, le dispositif de réception (31) recevant la tête de pipetage (20) par un déplacement dans deux directions perpendiculaires l'une à l'autre.
